# EUROPÄISCHE PATENTANMELDUNG

(11) **EP 3 285 368 A1**
(43) Veröffentlichungstag der Anmeldung: **21.02.2018**
(21) Anmeldenummer: 16184842.9
(22) Anmeldetag: 19.08.2016
(51) Int. Cl.: H02K 3/22, H02K 15/00, F16L 33/207

(54) **WASSERKAMMERDECKEL FÜR WASSERKÜHLSYSTEM EINER ELEKTRISCHEN MASCHINE**

(71) Anmelder: Siemens Aktiengesellschaft, 80333 München (DE)
(72) Erfinder: Mashkin, Andrey, 50672 Köln (DE); Brockschmidt, Mario, 45131 Essen (DE); Lehmann, Christoph, 47506 Neukirchen-Vluyn (DE); Hansmann, Daniel, 45699 Herten (DE); Höhner, Rene, 45881 Gelsenkirchen (DE); Merte, Ralf, 44225 Dortmund (DE); Pohlmann, Friedhelm, 45355 Essen (DE); Wysgol, Markus, 44789 Bochum (DE)

(57) **Zusammenfassung**

Die Erfindung betrifft einen Wasserkammerdeckel (12) zum Anschluss eines Wasserschlauchs (13) an eine Wasserkammer-Bodenplatte (4) eines direkt wassergekühlten Ständerstabs (10), aufweisend eine auf einer der Wasserkammer (11) abgewandten Seite offene Umfangsnut (9), die eingerichtet ist, den Wasserschlauch aufzunehmen, sowie ein Verfahren zur Montage eines Kühlwasserkreislaufs für einen direkt wassergekühlten Ständerstab.

## Beschreibung

Die Erfindung betrifft einen Wasserkammerdeckel zum Anschluss eines Wasserschlauchs an eine Wasserkammer-Bodenplatte eines direkt wassergekühlten Ständerstabs in einer elektrischen Maschine, sowie eine Kühlkreislauf-Anschlussarmatur mit einem solchen Wasserkammerdeckel und ein Verfahren zur Montage eines Kühlkreislaufs für einen direkt wassergekühlten Ständerstab.

Bei bekannten Turbogeneratoren und anderen elektrischen Maschinen werden die Turbogenerator-Ständerwicklungen häufig in an sich bekannter Weise mittels direkter Wasserkühlung gekühlt, wobei das Kühlwasser in den Ständerstäben mit Hilfe von Kühlkanälen zirkuliert wird, in denen entionisiertes Wasser fließt. Bekannte Wasserkühlsysteme bestehen beispielsweise aus Wassersammelringen am Generatorgehäuse, Wasserkammern an den Stab-Enden und Wasserkühlkanälen in den Stäben. Der Strompfad in den Ständerwicklungen verläuft dabei jedoch nicht über das Wasser oder Kühlkanäle, sondern über massives Kupfer entlang der Stäbe.

Bei einem bekannten direkt wassergekühlten Ständerwicklungsstab kommen beispielsweise Edelstahlkühlkanäle zum Einsatz. Die Ständerwicklungsstäbe mit solchen Edelstahlkühlkanälen weisen an einem Stab-Ende Wasserkammern aus Stahl auf, welche an die Stahlkühlkanäle angeschweißt sind.

Die Wasserkammer besteht dabei im Wesentlichen aus einer Wasserkammer-Bodenplatte und einem Wasserkammerdeckel, wobei die Kühlkanäle an Ausnehmungen der Bodenplatte mit dieser wasserdicht verschweißt sind. Daher haben die Ständerstäbe mit Edelstahlkühlkanälen keinerlei Wasser-Kupfer-Kontakt und kontaminieren das Kühlwasser nicht. Um das Kühlwasser gleichmäßig auf die einzelnen Kühlkanäle verteilen zu können, ist eben die Wasserkammer vorgesehen, die durch die Wasserkammer-Bodenplatte und einen daran angeschweißten Wasserkammerdeckel wasserdicht abgegrenzt ist, wobei der Wasserkammerdeckel einen Schraubanschluss für einen Wasserschlauch aufweist.

Die Montage des beschriebenen, bekannten Kühlkreislaufs gestaltet sich allerdings schwierig, weil die Wasserkammer umständlich an den Ständerstab angeschweißt oder angelötet werden muss und anschließend - bereits in der Einbauumgebung ebenso umständlich der Wasserschlauch an den Wasserkammerdeckel angeschraubt werden muss.

Eine Aufgabe der Erfindung ist daher, einen Wasserkammerdeckel anzugeben, der eine einfachere Montage des Kühlkreislaufs für einen direkt wassergekühlten Ständerstab ermöglicht.

Gemäß einem ersten Aspekt der Erfindung wird ein Wasserkammerdeckel zum Anschluss eines Wasserschlauchs an eine Wasserkammer-Bodenplatte eines direkt wassergekühlten Ständerstabs vorgeschlagen, aufweisend eine auf einer der Wasserkammer abgewandten Seite offene Umfangsnut, die eingerichtet ist, den Wasserschlauch aufzunehmen.

Alternativ wird die Umfangsnut zur Aufnahme des Wasserschlauchs in einem mit dem Wasserkammerdeckel verbundenen, separaten Element ausgebildet oder der Wasserkammerdeckel ist mit dem Wasserschlauch zusammen ausgebildet.

Gemäß einem zweiten Aspekt der Erfindung wird eine Kühlkreislauf-Anschlussarmatur mit wenigstens einem Wasserschlauch und einem Wasserkammerdeckel im Sinne der Erfindung vorgeschlagen.

Gemäß einem dritten Aspekt der Erfindung wird ein Verfahren zur Montage eines Kühlwasserkreislaufs für einen direkt wassergekühlten Ständerstab angegeben, wobei ein Wasserschlauch zwischen einer Außenwandung und einer Innenwandung einer Umfangsnut eines Wasserkammerdeckels eingeführt wird, und die Außenwandung radial nach innen gegen den Wasserschlauch und/oder die Innenwand wasserdicht verpresst wird.

Eine derartige Gestaltung des Wasserkammerdeckels ermöglicht es beispielsweise, einen bereits am Einbauort des Ständerstabs an die Wasserkammer montierten Wasserkammerdeckel deutlich einfacher mit dem Wasserschlauch zu verbinden, indem der umständliche Anschraubvorgang durch ein Aufstecken des Wasserschlauchs an der Umfangsnut ersetzt werden kann. Vorzugsweise können ein Durchmesser der Umfangsnut und ein Durchmesser des Wasserschlauchs derart aufeinander abgestimmt und/oder zueinander toleriert sein, dass eine verlässlich wasserdichte Presspassung entsteht, wenn der Schlauch auf die Nut aufgeschoben oder in die Nut eingeschoben wird.

Ein derartiger Montagevorgang kann beispielsweise durch Einsatz eines geeigneten Hebelwerkzeugs durchgeführt werden. Nötigenfalls können die Umfangsnut und der Wasserschlauch zusätzlich gegeneinander verpresst werden.

Alternativ wird ein Verfahren zur Montage eines Kühlreislaufs angegeben, wobei eine Wasserschlaucharmatur bestehend aus Wasserkammerdeckel und Wasserschlauch zuerst hergestellt und bevorzugt anschließend mit den restlichen Bestandteilen (z.B. Wassersammelrohr) des Wasserkühlsystems verbunden wird und erst am Einbauort durch wasserdichte Anbindung der Wasserkammerdeckel an die Wasserkammer-Bodenplatte des Kühlkreislaufs verbunden wird.

Vorzugsweise weist die Umfangsnut eine Innenwandung und eine Außenwandung auf, wobei die Außenwandung eingerichtet ist, radial nach innen gegen den Schlauch und die Innenwand wasserdicht verpresst zu werden. Dazu kann beispielsweise zumindest der Bereich des Wasserkammerdeckels, in dem die Umfangsnut angeordnet ist, aus einem geeignet duktilen Metallwerkstoff in einer geeigneten Wandstärke der Außenwandung ausgebildet sein. Vorzugsweise ist die Innenwandung mit einer größeren Wandstärke als die Außenwandung vorgesehen, um beim Anwenden eines Verpresswerkzeugs auf die Außenwandung diese gegen den Schlauch und gegen die Innenwandung drücken zu können, ohne dass die Innenwandung nachgibt.

Gemäß einer bevorzugten Weiterbildung weist der Wasserkammerdeckel einen Deckelkörper und ein Wasserschlauch-Anschlussteil auf, wobei letzteres mit dem Deckelkörper formschlüssig und wasserdicht verbunden ist und/oder wobei an dem Wasserschlauch-Anschlussteil die Umfangsnut angeordnet ist. Ein solcher Aufbau des Wasserkammerdeckels mit separaten Bauteilen, die vorzugsweise mittels einer Verschraubung mit 0-Ring-Dichtung, mittels einer Wärmeschrumpfverbindung oder mittels einer Verlötung verbunden sind, ermöglicht es, für den Deckelkörper des Wasserkammerdeckels und das Wasserschlauch-Anschlussteil unterschiedliche Materialien, z.B. Polymere und Metalle, zu verwenden. Dies kann beispielsweise aus Kostengründen wünschenswert sein.

Um eine gemeinsame Montage des Wasserkammerdeckels mit bereits angeschlossenem Wasserschlauch zu ermöglichen, weist der Wasserkammerdeckel gemäß einer bevorzugten Ausführung wenigstens ein Bodenplatten-Verbindungselement auf, das eingerichtet ist, in einem montierten Zustand formschlüssig mit der Wasserkammer-Bodenplatte verbunden zu sein. Insbesondere wenn die formschlüssige Verbindung nicht von selbst wasserdicht ist, kann der Wasserkammerdeckel vorzugsweise ein Dichtungselement aufweisen, das an einer Anlagefläche des Wasserkammerdeckels angeordnet ist und eingerichtet ist, in einem montierten Zustand einen Bodenkammer-Verbindungsumfang des Wasserkammerdeckels und der Wasserkammerbodenplatte gegen austretendes Wasser abzudichten.

Sowohl die Verbindung zwischen dem Wasserschlauch-Anschlussteil und dem Deckelkörper als auch die Verbindung zwischen dem Deckelkörper und der Wasserkammer-Bodenplatte kann unabhängig von der Art der jeweils anderen Verbindung beispielsweise mit einer der folgenden Verbindungsarten ausgebildet sein: mit einer Schraubenverbindung, mit einer Wärmeschrumpfverbindung oder mit einer Verlötung.

Diese Verbindungsarten weisen unterschiedliche Vorteile auf. So kann beispielsweise eine Verlötung in sich bereits wasserdicht ausgebildet sein, ebenso wie eine Wärmeschrumpfverbindung. Bei einer Wärmeschrumpfverbindung kann eine verhältnismäßig einfache Montage erreicht werden. Schraubverbindungen können verhältnismäßig günstig umgesetzt werden. Im Falle einer Schraubverbindung ist vorzugsweise der Einsatz mehrerer Schrauben vorgesehen, die sich im montierten Zustand durch Schraubenlöcher des Wasserkammerdeckels hin zu einem Innengewinde der Wasserkammer-Bodenplatte erstrecken, indem sie eingeschraubt werden können und mit ihrem Schraubenkopf dann den Wasserkammerdeckel halten können.

Auch kann eine Schraubverbindung durch eine Überwurfmutter bewerkstelligt werden, die über den Wasserkammerdeckel gezogen wird und auf eine runde Bodenplatte aufgeschraubt wird.

Bei der Montage des Wasserschlauchs in der Umfangsnut wird gemäß einer bevorzugten Ausführung der Wasserschlauch bis zu einem Nutanschlag in die Nut eingeführt, insbesondere um eine gleichbleibende Verbindungsqualität, sei es beispielsweise durch eine Presspassung oder durch ein Verpressen einer Außenwandung der Umfangsnut sicherzustellen.

Vor der Montage des Wasserschlauchs werden in einer bevorzugten Ausführung ein Wasserschlauch-Anschlussteil und ein Deckelkörper des Wasserkammerdeckels miteinander formschlüssig und wasserdicht verbunden.

Bei einer weiteren bevorzugten Ausführung wird nach der Montage des Wasserschlauchs in der Umfangsnut die mit dem Wasserkammerdeckel und dem Schlauch ausgebildete Kühlkreislauf-Anschlussarmatur mittels eine Bodenplatten-Verbindungselements (vorzugsweise mehrerer Schrauben) mit einer Wasserkammer-Bodenplatte (die dann ein Innengewinde zur Aufnahme der Schrauben enthält) formschlüssig und wasserdicht verbunden. Dazu kann ein O-Ring oder eine andere geeignete Dichtung Einsatz finden.

Die oben beschriebenen Eigenschaften, Merkmale und Vorteile dieser Erfindung sowie die Art und Weise, wie diese erreicht werden, werden klarer und deutlicher verständlich zusammen mit der folgenden Beschreibung der Ausführungsbeispiele, die im Zusammenhang mit den Zeichnungen näher erläutert werden, wobei zeigt:
- Figur 1: einen direkt wassergekühlten Ständerstab mit einem Wasserkammerdeckel gemäß einer Ausführung der Erfindung in einer Schnittansicht; und
- Figur 2: einen direkt wassergekühlten Ständerstab mit einem Wasserkammerdeckel gemäß einer weiteren Ausführung der Erfindung in einer Schnittansicht.

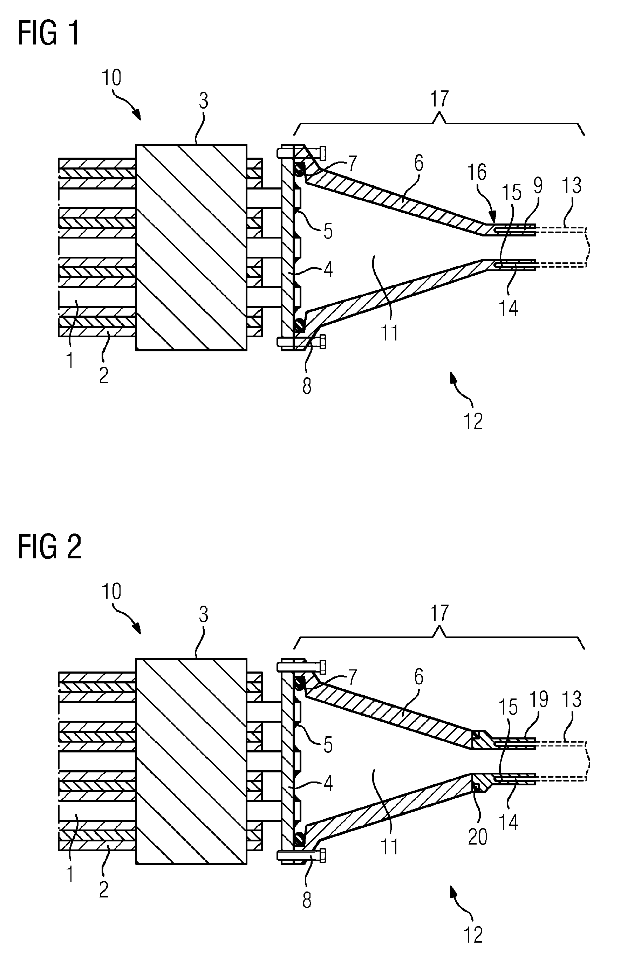

In Figur 1 ist ein wassergekühlter Ständerstab 10 eines Turbogenerators mit Stahlkühlkanälen 1 und Kupferteilleitern 2 an einem axialen Ende des Ständerstabs 10 dargestellt, an welchem dieser mittels eines Kupferleitblocks 3 elektrisch angeschlossen ist und mittels einer Wasserkammerbodenplatte 4 an einem Kühlwasserkreislauf des Turbogenerators anschließbar ist.

Die einzelnen Stahlkühlkanäle 1 sind an der Wasserkammer-Bodenplatte 4 mittels umlaufender, wasserdicht ausgeführter Schweißnähte 5 befestigt. Auf der dem Ständerstab 10 abgewandten Seite der Wasserkammer-Bodenplatte 4 bildet sich eine Wasserkammer 11 zum Anschluss des Ständerstabs 10 an den Kühlwasserkreislauf aus.

Die Wasserkammer 11 wird gebildet durch die Wasserkammer-Bodenplatte 4 und den Wasserkammerdeckel 12, der mit vier als Schrauben ausgebildeten Bodenplatten-Verbindungselementen 8 an der Wasserkammer-Bodenplatte 4 festgeschraubt ist. Die durch die Schrauben 8 vermittelte Anpresskraft zwischen dem Wasserkammerdeckel 12 und der Wasserkammer-Bodenplatte 4 ermöglicht eine Abdichtung der Wasserkammer 11 gegen Wasseraustritt mittels eines als umlaufendem O-Ring ausgebildeten Dichtungselements 7.

Der Wasserkammerdeckel 12 weist einen Deckelkörper 6 zum Abdichten der Wasserkammer 11 gegenüber Wasseraustritt und eine Umfangsnut 9 auf, die eingerichtet ist, einen in Figur 1 gestrichelt dargestellten Wasserschlauch 13 aufzunehmen. Der Wasserschlauch ist wiederum eingerichtet, konkret die Wasserkammer 11 und damit auch den Kühlkreislauf mit den Stahlkühlkanälen 1 mit Kühlwasser zu versorgen.

Die Umfangsnut 9 weist eine Innenwandung 14 und eine Außenwandung 15 auf, wobei die Außenwandung 15 eingerichtet ist, radial nach innen gegen den Schlauch 13 und gegen die Innenwandung 14 wasserdicht verpresst zu werden. Zudem ist in diesem Ausführungsbeispiel ein Anschlag 16 vorgesehen, bis zu welchem der Wasserschlauch 13 bei der Montage an den Wasserkammerdeckel 12 eingeschoben wird.

Nachfolgend wird nun dargestellt, wie ein Kühlwasserkreislauf im Sinne der Erfindung einfach und zeit- bzw. kostengünstig montiert werden kann, und wie sich dies von Ausführungen gemäß dem Stand der Technik abhebt.

Bei bekannten wassergekühlten Ständerstäben, die mittels einer Wasserkammer an einen Kühlwasserkreislauf angeschlossen werden, wird bei einem Vormontageschritt der Ständerstab zusammen mit der geschweißten Wasserkammer bereits im Turbogenerator platziert. Ein herkömmlicher Wasserschlauch weist an seinem wasserkammerseitigen Ende eine Schraubenmutter auf, die an einer ungünstig zu erreichenden Stelle mittels eines geeigneten Werkzeuges auf ein Gewinde des herkömmlichen Wasserkammerdeckels geschraubt werden muss. Die ist ein zeitraubender und fehleranfälliger Prozess, den es zu vermeiden gilt.

Der Wasserkammerdeckel 12 gemäß der hier beschriebenen Ausführung ermöglicht eine andere Montage: In einem ersten Schritt wird der Wasserschlauch 13 in den noch nicht am Ständerstab 10 angeordneten Wasserkammerdeckel 12 bis zum Anschlag 16 zwischen der Innenwandung 14 und der Außenwandung 15 der Umfangsnut 9 eingeschoben. Anschließend wird an einer frei wählbaren Montagestelle die Außenwandung 15 gegen den Schlauch 13 und die Innenwandung 14 mit einem geeigneten Werkzeug verpresst.

Die dadurch vormontierte Kühlkreislauf-Armatur 17 kann anschließend zum vormontierten Ständerstab 10 geführt und an die Wasserkammer-Bodenplatte 4 angelegt werden. Dort kann mittels der Schrauben 8 bei geeigneter Positionierung des Dichtungselementes 7 eine wasserdichte Verbindung durch Einschrauben hergestellt werden, wobei die wasserdichte Wasserkammer 11 entsteht. Eine derartige Montage ist deutlich weniger fehleranfällig als die eingangs beschriebene bekannte Montage.

In Figur 2 ist eine Ausführungsform dargestellt, die sich von derjenigen gemäß Figur 1 insbesondere dadurch unterscheidet, dass der Wasserkammerdeckel 12 neben dem Deckelkörper 6 ein separates Wasserschlauch-Anschlussteil 19 aufweist, welches beispielsweise mit dem Deckelkörper geeignet verschrumpft wird, wobei in der hier beschriebenen Ausführungsform ein zusätzliches Dichtungselement 20 die wasserdichte Ausführung sicherstellt.

Eine derartige Gestaltung kann zum Beispiel den Vorteil nach sich ziehen, dass der Deckelkörper 6 aus einem verhältnismäßig günstigen Werkstoff hergestellt werden kann, beispielsweise aus einem Kunststoff, wohingegen dann nur das verhältnismäßig kleine Wasserschlauch-Anschlussteil 19 aus einem teureren Werkstoff - wie beispielsweise einem verpressbaren Metallwerkstoff - hergestellt sein muss.

Ansonsten ergeben sich aus einem Wasserkammerdeckel 12 gemäß Figur 2 im Wesentlichen die gleichen Vorteile gegenüber herkömmlichen Kühlwasserkreisläufen wie zu Figur 1 beschrieben.

## Patentansprüche

1. Wasserkammerdeckel (12) zum Anschluss eines Wasserschlauchs (13) an eine Wasserkammer-Bodenplatte (4) eines direkt wassergekühlten Ständerstabs (10) einer elektrischen Maschine,
aufweisend eine auf einer der Wasserkammer (11) abgewandten Seite offene Umfangsnut (9), die eingerichtet ist, den Wasserschlauch aufzunehmen.

2. Wasserkammerdeckel gemäß Anspruch 1,
wobei die Umfangsnut eine Innenwandung (14) und eine Außenwandung (15) aufweist, und die Außenwandung eingerichtet ist, radial nach innen gegen den Schlauch und die Innenwand wasserdicht verpresst zu werden.

3. Wasserkammerdeckel gemäß Anspruch 1 oder 2,
aufweisend einen Deckelkörper (6) und ein Wasserschlauch-Anschlussteil (19), das mit dem Deckelkörper formschlüssig und wasserdicht verbunden ist und an dem die Umfangsnut angeordnet ist.

4. Wasserkammerdeckel gemäß einem der vorherigen Ansprüche,
aufweisend wenigstens ein Bodenplatten-Verbindungselement (8), das eingerichtet ist, in einem montierten Zustand formschlüssig mit der Wasserkammer-Bodenplatte verbunden zu sein.

5. Wasserkammerdeckel gemäß Anspruch 4,
aufweisend ein Dichtungselement (7), das an einer Anlagefläche des Wasserkammerdeckels angeordnet ist und eingerichtet ist, in einem montierten Zustand einen Bodenkammer-Verbindungsumfang des Wasserkammerdeckels und der Wasserkammer-Bodenplatte gegen austretendes Wasser abzudichten.

6. Wasserkammerdeckel gemäß einem der Ansprüche 3 bis 5,
wobei die Verbindung zwischen dem Wasserschlauch-Anschlussteil und dem Deckelkörper und/oder die Verbindung zwischen dem Deckelkörper und der Wasserkammer-Bodenplatte mit einer Schraubverbindung, mit einer Wärmeschrumpfverbindung oder mit einer Verlötung oder mit einer Schweißnaht ausgebildet ist.

7. Kühlkreislauf-Anschlussarmatur (17) mit wenigstens einem Wasserschlauch und einem Wasserkammerdeckel gemäß einem der vorherigen Ansprüche.

8. Verfahren zur Montage eines Kühlwasserkreislaufs für einen direkt wassergekühlten Ständerstab, wobei
- ein Wasserschlauch zwischen einer Außenwandung und einer Innenwandung einer Umfangsnut eines Wasserkammerdeckels eingeführt wird,
- die Außenwandung radial nach innen gegen den Wasserschlauch und/oder die Innenwandung wasserdicht verpresst wird.

9. Verfahren gemäß Anspruch 8, wobei
- zuvor ein Wasserschlauch-Anschlussteil und ein Deckelkörper des Wasserkammerdeckels miteinander formschlüssig und wasserdicht verbunden werden.

10. Verfahren gemäß Anspruch 8 oder 9, wobei
- anschließend eine mit dem Wasserkammerdeckel und dem Schlauch ausgebildete Kühlkreislauf-Anschlussarmatur mittels eines Bodenplatten-Verbindungselements mit einer Wasserkammer-Bodenplatte formschlüssig und wasserdicht verbunden wird.
